# EUROPÄISCHE PATENTSCHRIFT

(11) **EP 3 212 585 B1**
(45) Veröffentlichungstag und Bekanntmachung des Hinweises auf die Patenterteilung: **26.12.2018**
(21) Anmeldenummer: 15763278.7
(22) Anmeldetag: 08.09.2015
(51) Int. Cl.: C03B 35/14, C03B 23/025, C03B 23/03, C03B 23/035

(54) **WERKZEUG FÜR EINEN GLASBIEGEPROZESS**
TOOL FOR A GLASS BENDING PROCESS
OUTIL POUR UN PROCESSUS DE PLIAGE AU GAZ

(30) Priorität: 28.10.2014 EP 14190619
(43) Veröffentlichungstag der Anmeldung: 06.09.2017
(73) Patentinhaber: Saint-Gobain Glass France, 92400 Courbevoie (FR)
(72) Erfinder: BALDUIN, Michael, 52477 Alsdorf (DE); LE NY, Jean-Marie, 4851 Gemmenich (DE); SCHALL, Günther, 52372 Kreuzau (DE)
(74) Vertreter: Feist, Florian Arno
(86) Internationale Anmeldenummer: PCT/EP2015/070430
(87) Internationale Veröffentlichungsnummer: WO 2016/066309

(56) Entgegenhaltungen:
- EP-A1- 0 613 865
- EP-A2- 0 706 978
- US-A- 3 778 244
- US-A- 4 229 199
- US-A- 4 511 386
- US-A- 5 833 729
- US-A- 6 138 477
- US-A1- 2007 157 671
- US-B1- 6 318 125

## Beschreibung

Die Erfindung betrifft ein Werkzeug für einen Glasbiegeprozess, eine Verfahren zum Biegen von Glasscheiben und die Verwendung des Werkzeugs.

Im Fahrzeugbereich sind gebogene Verbundgläser üblich, insbesondere als Windschutzscheiben. Es ist bekannt, dass es vorteilhaft ist, die Einzelscheiben des Verbundglases gemeinsam simultan zu biegen. Paarweise gebogene Glasscheiben sind hinsichtlich ihrer Biegung aufeinander abgestimmt und eignen sich daher in besonderem Maße, miteinander zum Verbundglas laminiert zu werden. Ein Verfahren zum paarweisen Biegen von Glasscheiben ist beispielsweise aus DE 101 05 200 A1 bekannt.

EP 1 836 136 B1 offenbart ein weiteres Biegeverfahren sowie ein gattungsgemäßes Werkzeug, dort bezeichnet als obere Form (forme superieure). Das konvexe Werkzeug wird als obere Form in einem Biegeverfahren eingesetzt und ist dazu geeignet, die zu biegenden Glasscheiben gegen den Einfluss der Schwerkraft zu halten. Das Haltewerkzeug umfasst eine rahmenartige, konvexe Kontaktfläche und eine Abdeckung mit einem peripheren Luftleitblech. Durch eine Saugwirkung entlang der Scheibenkanten wird die zu biegende Glasscheibe entgegen der Wirkung der Schwerkraft an die Kontaktfläche angepresst und dadurch sicher am Werkzeug gehalten. Auch zwei aufeinander liegende Glasscheiben können simultan im Werkzeug gehalten werden. Das Werkzeug kann verwendet werden, um die Glasscheiben zwischen verschiedenen Positionen der Biegevorrichtung zu transportieren, beispielsweise um die Glasscheiben von einer Biegeform zu übernehmen und an eine andere zu übergeben. Das Werkzeug kann auch für einen Pressbiegeschritt verwendet werden, wobei die Glasscheiben zwischen dem Werkzeug und einer komplementären Gegenform unter Einwirkung von Druck- und/oder Saugwirkung geformt wird.

Bei dem in EP 1 836 136 B1 beschriebenen Verfahren werden die Glasscheiben auf einer ersten unteren Biegeform durch Schwerkraftbiegen vorgebogen. Die Glasscheiben werden dann durch das gattungsgemäße Haltewerkzeug von der ersten unteren Biegeform aufgenommen und auf eine zweite untere Biegeform transportiert. Zwischen dem Haltewerkzeug und der zweiten unteren Biegeform erhalten die Glasscheiben in einem Pressbiegeschritt ihre endgültige Form, bevor sie wiederum durch das gattungsgemäße Haltewerkzeug zum Abkühlen auf eine untere Form übergeben werden.

US 3,778,244 A offenbart ein oberes Biegewerkzeug mit einer konkaven oder konvexen vollflächigen Kontaktfläche (Vollform) und eine Abdeckung mit einem peripheren Luftleitblech. Durch das Luftleitblech kann die Kante der zu biegenden Glasscheibe mit einem Luftstrom bestrichen werden, so dass die Glasscheibe an die Kontaktfläche angedrückt wird. Zusätzlich kann die Glasscheibe durch Öffnungen in der vollflächigen Kontaktfläche an diese angesaugt werden. Das Werkzeug und die Saugwirkung sind nicht dazu vorgesehen, die Glasscheibe am Werkzeug zu halten, sondern es soll eine aktive Verformung der Glasscheibe erreicht werden.

Moderne Fahrzeugverglasungen weisen immer komplexere Formen auf mit bereichsweise sehr ausgeprägten Krümmungsradien. Beim Aufnehmen der Glasscheiben durch das konvexe Haltewerkzeug wird eine Saugwirkung auf die Scheiben ausgeübt, welche der Krümmungsrichtung der Glasscheiben entgegenwirkt. Es besteht daher die Gefahr, dass eine erzeugte Krümmung infolge der Saugwirkung beim Halten der Glasscheiben verringert wird. Es besteht daher ein Bedarf an neuen Biegewerkzeugen, welche diesen Nachteil überwinden und mit denen insbesondere stark gebogene Scheiben in hoher Qualität und verfahrenstechnisch sinnvoll erzeugt werden können.

Der vorliegenden Erfindung liegt die Aufgabe zugrunde, ein solches verbessertes Biegewerkzeug bereitzustellen. Das Biegewerkzeug soll insbesondere dazu geeignet sein, Glasscheiben gegen die Wirkung der Schwerkraft zu halten, ohne dass die Scheibenbiegung dabei durch die Saugwirkung reduziert wird.

Die Aufgabe der Erfindung wird erfindungsgemäß durch ein Werkzeug gemäß Anspruch 1 gelöst. Bevorzugte Ausführungen gehen aus den Unteransprüchen hervor.

Das erfindungsgemäße Werkzeug zum Halten mindestens einer Glasscheibe durch eine Saugwirkung in einem Biegeprozess umfasst eine rahmenartige, konvexe Kontaktfläche und eine Abdeckung mit einem peripheren, die Kontaktfläche zumindest bereichsweise umgebende Luftleitblech, wobei das Werkzeug dazu geeignet ist,
- einen ersten, verminderten Druck p₁ (Haltedruck) zu erzeugen in einem ersten Druckbereich zwischen dem Luftleitblech und der Kontaktfläche;
- einen zweiten Druck p₂ (Kompensationsdruck) zu erzeugen in einem zweiten Druckbereich, wobei der zweiten Druck p₂ größer ist als der erste Druck p₁.

Die hier angegebenen Drücke p₁ und p₂ werden insbesondere auf der dem Werkzeug zugewandten Oberfläche der zu haltenden Glasscheibe erzeugt.

Wie nachstehend genauer ausgeführt wird, werden die Glasscheiben durch den ersten Druckbereich sicher am Biegewerkzeug gehalten, wobei sich die Saugwirkung insbesondere auf die Scheibenkanten auswirkt. Im zweiten Druckbereich liegt eine geringere oder gar keine Saugwirkung vor, so dass unerwünschte Auswirkungen auf die Scheibenform, insbesondere im zentralen Bereich der Scheibe vermieden werden können. Das sind große Vorteile der vorliegenden Erfindungen.

Das erfindungsgemäße Werkzeug gehört zur Gruppe der Werkzeuge, mit denen mindestens eine Glasscheibe durch eine Saugwirkung gehalten wird. Das erfindungsgemäße Werkzeug ermöglicht während eines Biegeprozesses das Halten der zu biegenden Glasscheibe gegen den Einfluss der Schwerkraft, indem eine durch einen Unterdruck erzeuget Saugwirkung auf die Glasscheibe ausgeübt und durch das Biegewerkzeug definiert verteilt wird, so dass die Glasscheibe infolge der Saugwirkung an das Werkzeug angepresst wird. Das Werkzeug kann auch als Saugform bezeichnet werden.

Das erfindungsgemäße Werkzeug zum Halten mindestens einer Glasscheibe durch eine Saugwirkung enthält eine rahmenartige Kontaktfläche. Es ist also kein sogenanntes vollflächiges Werkzeug, bei dem die Glasscheibe mit einer Formfläche vollflächig in Kontakt gebracht wird. Es gehört vielmehr zur Gruppe der Werkzeuge, bei denen in peripherer Bereich der Glasscheibe an den Seitenkanten oder in der Nähe der Seitenkanten mit dem Werkzeug in direktem Kontakt steht, während der größte Teil der Scheibe keinen direkten Kontakt zum Werkzeug hat. Ein solches Werkzeug kann auch als Ring (Haltering, Biegering) oder Rahmen (Rahmenform) bezeichnet werden. Der Begriff "rahmenartige Kontaktfläche" im Sinne der Erfindung dient lediglich zur Abgrenzung des erfindungsgemäßen Werkzeugs von einer vollflächigen Form. Die Kontaktfläche muss keinen vollständigen Rahmen bilden, sondern kann auch unterbrochen sein. Die Kontaktfläche ist in Form eines vollständigen oder unterbrochenen Rahmens ausgebildet.

Die Breite der Kontaktfläche beträgt bevorzugt von 0,1 cm bis 10 cm, besonders bevorzugt von 0,2 cm bis 1 cm, beispielsweise 0,3 cm.

Das Werkzeug ist weiter mit einem sogenannten Skelett ausgestattet, worunter eine flächige Struktur verstanden ist, welche die Kontaktfläche trägt. Das Skelett ist mit der Kontaktfläche ausgebildet. Die Kontaktfläche ist auf dem Skelett angeordnet.

Das erfindungsgemäße Werkzeug ist ein sogenanntes konvexes Werkzeug. Das bedeutet, dass die Kontaktfläche konvex ausgebildet ist. Unter einer konvexen Form wird dabei eine Form verstanden, bei der die Ecken und Ränder der Glasscheibe im bestimmungsgemäßen Kontakt mit dem Werkzeug näher in Richtung des Werkzeugs gebogen sind als die Scheibenmitte.

Das erfindungsgemäße Werkzeug umfasst weiter eine Abdeckung. Die Abdeckung ist auf der Seite der Kontaktfläche angeordnet, welche während des Halte- oder Biegevorgangs von der Glasscheibe abgewandt ist. Die Abdeckung ermöglicht das Erzeugen der für den Haltevorgang wesentlichen Saugwirkung. Die Saugwirkung wird insbesondere durch Absaugen der Luft zwischen Abdeckung und Biegeskelett erzeugt.

Die Abdeckung ist mit einem peripheren, die Kontaktfläche zumindest bereichsweise umgebende Luftleitblech ausgebildet. Ein solches Luftleitblech wird häufig auch als Schürze bezeichnet. Das Luftleitblech ist bevorzugt am Ende der Abdeckung angeordnet. Das Luftleitblech umgibt oder umrahmt die Kontaktfläche vollständig oder abschnittsweise. Während des Haltevorgangs weist das Luftleitblech bevorzugt einen Abstand zu den Seitenkanten der Glasscheibe von 3 mm bis 50 mm auf, besonders bevorzugt von 5 mm bis 30 mm, beispielsweise 20 mm auf.

Das erfindungsgemäße Biegewerkzeug ist dazu geeignet, in mindestens einem ersten Druckbereich einen ersten, verminderten Druck p₁ zu erzeugen. Unter einem verminderten Druck wird im Sinne der Erfindung ein Druck verstanden, welcher geringer ist als der Umgebungsdruck. Bei einem verminderten Druck liegt also bezogen auf den Umgebungsdruck ein Unterdruck vor. Durch den verminderten Druck wird eine Saugwirkung erreicht. Der Bereich, in dem der erste Druck p₁ wirkt, wird im Sinne der Erfindung als erster Druckbereich bezeichnet. Der erste Druckbereich ist zwischen dem Luftleitblech und der Kontaktfläche angeordnet. Der erste Druckbereich ist bevorzugt ein einziger, zusammenhängender, rahmenartiger Bereich. Der erste Druckbereich kann aber auch aus mehreren voneinander getrennten Abschnitten mit gleichem Druck bestehen.

Der erste Druckbereich ist geeignet, die Kante der zu haltenden Glasscheibe zumindest abschnittsweise mit einem Luftstrom zu bestreichen und dadurch die Glasscheibe an die Kontaktfläche anzudrücken. Der durch den ersten Druck p₁ erzeugte Luftstrom wird durch das Luftleitblech so gelenkt, dass die Seitenkante der Glasscheibe zumindest abschnittsweise bestrichen wird. Durch den Luftstrom wird die Glasscheibe wirksam am Biegewerkzeug gehalten und an die Kontaktfläche angedrückt. Das Biegewerkzeug kann dadurch insbesondere als obere Form in einem Biegeprozess verwendet werden, wobei die Glasscheibe durch den die Kante bestreichenden Luftstrom entgegen der Wirkung der Schwerkraft am Werkzeug gehalten wird. Der erste Druck p₁ kann auch als Haltedruck bezeichnet werden.

Unter einer oberen Form wird eine Form verstanden, welche die obere, vom Erdboden abgewandte Oberfläche der Glasscheibe kontaktiert. Unter einer unteren Biegeform wird eine Form verstanden, welche die untere, dem Erdboden zugewandte Oberfläche der Glasscheibe kontaktiert. Die Glasscheibe kann auf eine untere Form abgelegt werden.

Auch mehrere, beispielsweise zwei aufeinander liegende Glasscheiben können durch das erfindungsgemäße Werkzeug simultan gehalten werden. Das Werkzeug eignet sich daher besonders für Verfahren des paarweisen Biegens, bei denen zwei Einzelscheiben, die später zu einem Verbundglas laminiert werden sollen, gemeinsam simultan kongruent gebogen werden.

Das erfindungsgemäße Werkzeug ist bevorzugt mit einem Ansaugrohr versehen, mit dem die Saugwirkung erzeugt werden kann. Das Ansaugrohr ist bevorzugt auf der der Kontaktfläche abgewandten Seite des Werkzeugs angeordnet. Der erste Druckbereich ist mit dem Ansaugrohr verbunden, so dass Luft aus dem ersten Druckbereich abgesaugt wird, wodurch der erste Druck p₁ erzeugt wird.

Das erfindungsgemäße Biegewerkzeug ist weiter dazu geeignet, in mindestens einem zweiten Druckbereich einen zweiten Druck p₂ zu erzeugen. Der zweite Druck p₂ ist erfindungsgemäß größer als der erste Druck p₁ (das heißt der Unterdruck ist im zweiten Druckbereich weniger stark als im ersten Druckbereich), so dass die durch den Druck p₂ erzeugte Saugwirkung geringer ist als die durch den Druck p₁ erzeugte Saugwirkung. Der zweite Druck p₂ kann dem Umgebungsdruck entsprechen, so dass kein Unterdruck und damit keine Saugwirkung im zweiten Druckbereich vorliegt. Da im zweiten Druckbereich eine geringere oder gar keine Saugwirkung auf die Glasscheiben ausgeübt wird, können unerwünschte Auswirkungen auf die Scheibenbiegung, insbesondere eine Verringerung einer vorher erzeugten Krümmung, wirksam vermieden werden. Der zweite Druck p₂ kann auch als Kompensationsdruck bezeichnet werden.

In einer bevorzugten Ausgestaltung ist der zweite Druckbereich in einem zentralen Bereich des Werkzeugs innerhalb der Kontaktfläche angeordnet ist. Das bedeutet, dass der zweite Druckbereich von der rahmenartigen Kontaktfläche umgeben wird. Der zweite Druckbereich ist dazu geeignet, auf einen zentralen Bereich der zu haltenden Glasscheibe eine geringere Saugwirkung auszuüben als auf die Scheibenränder.

Das Werkzeug ist bevorzugt das dazu geeignet, die Glasscheibe zu halten, ohne sie zu biegen.

In einer vorteilhaften Ausgestaltung ist das Werkzeug mit mindestens einem Belüftungsrohr versehen, welches einen vollständigen oder teilweisen Druckausgleich zwischen der Umgebung und dem zweiten Druckbereich ermöglicht. Durch das Belüftungsrohr strömt Luft von außen nach. Der zweite Druck p₂ kann so gegenüber dem ersten Druck p₁ erhöht werden.

Das Belüftungsrohr ist in einer bevorzugten Ausgestaltung mit einem Ventil zur Regulierung des Durchflusses versehen ist. Dadurch kann der zweite Druck p₂ aktiv reguliert werden.

Der zweite Druckbereich kann mit dem vorstehend beschriebenen Ansaugrohr für den ersten Druckbereich verbunden sein, wobei der höhere zweite Druck p₂ durch die geeignete Gestaltung der Leitungsquerschnitte und/oder mindestens ein Belüftungsrohr erreicht wird. Der zweite Druckbereich kann alternativ auch über ein eigenes Ansaugrohr verfügen.

Die Aufgabe der Erfindung wird weiter gelöst durch ein Verfahren zum Biegen mindestens einer Glasscheibe, das mindestens einen Halteschritt umfasst, bei dem ein erfindungsgemäßes Werkzeug als eine obere Form verwendet wird und wobei die Glasscheibe durch den die Kante bestreichenden Luftstrom des ersten Druckbereichs gegen den Einfluss der Schwerkraft am Werkzeug gehalten wird.

Während des Halteschrittes wird die Form der Glasscheibe bevorzugt nicht verändert. Das Halten durch das erfindungsgemäße Werkzeug findet also ohne weiteres Biegen der Glasscheibe statt. Die Glasscheibe wird lediglich sicher am Werkzeug fixiert. Das Werkzeug ist für einen solchen reinen Halteschritt besonders geeignet, unerwünschte Biegungen im zentralen Bereich können durch den erfindungsgemäßen zweiten Druckbereich wirksam verhindert werden. Das Werkzeug kann aber neben dem Halteschritt auch als obere Form in einem Pressbiegeschritt verwendet werden, wobei die Verformung der Glasscheibe nicht durch das obere Werkzeug alleine, sondern durch Einfluss eines komplementären unteren Werkzeugs erfolgt.

Alternativ kann in einer Weiterbildung der Erfindung aber auch mit dem Ansaugen der Glasscheibe an das Werkzeug ein weiteres Biegen verbunden sein. Dies kann beispielsweise durch eine geeignete Formgebung der Kontaktfläche erreicht werden, so dass sich die Glasscheibe infolge der Saugwirkung an die Kontaktfläche anschmiegt und so gebogen wird. Das Werkzeug wirkt dann zugleich als Haltewerkzeug und Biegewerkzeug.

Das Verfahren ist in einer besonders bevorzugten Ausführung das Verfahren, welches in EP 1 836 136 B1 detailliert beschrieben ist, wobei das erfindungsgemäße Werkzeug anstelle der dort beschriebenen oberen Form ("forme superieure 11") eingesetzt wird. Das Verfahren wird bevorzugt mittels der Vorrichtung durchgeführt, die in EP 1 836 136 B1 detailliert beschrieben ist, wobei ebenfalls das erfindungsgemäße Werkzeug anstelle der dort beschriebenen oberen Form ("forme superieure 11") eingesetzt wird.

Bevorzugt wird die Glasscheibe zunächst auf Biegetemperatur erwärmt und auf einer ersten unteren Form vorgebogen. Typischerweise wird die im Ausgangszustand plane Glasscheibe auf der ersten unteren Form positioniert. Die erste untere Form ist typischerweise beweglich ausgebildet, beispielsweise auf einem Wagen gelagert und durchläuft zum Erwärmen einen Ofen, wobei die Glasscheibe auf Biegetemperatur erwärmt wird. Unter Biegetemperatur wird dabei eine Temperatur verstanden, bei der die Glasscheibe ausreichend erweicht ist, um verformt werden zu können. Typische Biegetemperaturen betragen von 500 °C bis 700 °C, bevorzugt von 550 °C bis 650 °C. Die erste untere Form ist bevorzugt eine konkave, zum erfindungsgemäßen Werkzeug komplementäre Form. Die erste untere Form eignet sich insbesondere zum Schwerkraftbiegen. Durch das Erwärmen auf Biegetemperatur wird die Glasscheibe erweicht und schmiegt sich unter Wirkung der Schwerkraft an die erste untere Biegeform an. Die Glasscheibe wird also mittels Schwerkraftbiegen vorgebogen, bevor sie durch weitere Verfahrensschritte weiter gebogen wird.

Nach dem Vorbiegen wird die Glasscheibe durch das erfindungsgemäße Werkzeug von der ersten unteren Form aufgenommen. Das erfindungsgemäße Werkzeug wird von oben an die Glasscheibe angenähert, was durch eine horizontale Bewegung des erfindungsgemäßen Werkzeugs und/oder der ersten unteren Form erreicht werden kann. Das erfindungsgemäße Biegewerkzeug wirkt also als obere Form. Bei ausreichend geringem Abstand wird die Glasscheibe durch die Saugwirkung des ersten Druckbereichs an das Werkzeug angesaugt und durch dieses gehalten. Die Glasscheibe wird dabei mit der Kontaktfläche in Kontakt gebracht, so dass die Kante der Glasscheibe zumindest abschnittsweise von einem durch den ersten verminderten Druck p1 erzeugten Luftstrom bestrichen wird. Die Kante der Glasscheibe ist dazu bevorzugt zumindest abschnittsweise im ersten Druckbereich angeordnet. Die Glasscheibe wird so durch das erfindungsgemäße Werkzeug von der ersten unteren Form übernommen. Die Glasscheibe wird im weiteren Verfahren durch das erfindungsgemäße Werkzeug an eine weitere (untere) Form übergeben.

Bevorzugt wird die Glasscheibe nach dem Vorbiegen und der Übernahme durch das erfindungsgemäße Werkzeug einem Pressbiegeschritt unterzogen zwischen dem erfindungsgemäßen Werkzeug und einer zweiten unteren Form. Die Verformung der Glasscheibe erfolgt dabei durch Druck- und/oder Saugwirkung der beiden komplementären Biegewerkzeuge. Die zweite untere Form ist bevorzugt konkav, massiv ausgebildet und mit Öffnungen versehen. Bevorzugt wird durch die Öffnungen der zweiten unteren Form eine Saugwirkung auf die Glasscheibe ausgeübt, welche geeignet ist, die Glasscheibe weiter zu verformen. Während des Pressbiegens ist die Glasscheibe zwischen den Formen fixiert, so dass die Saugwirkung der oberen Form ausgeschaltet werden kann. In diesem Fall verbleibt die Glasscheibe nach Trennung der Formen in der unteren Form.

Die Glasscheibe wird bevorzugt nach dem Pressbiegen vom erfindungsgemäßen Werkzeug an eine weitere untere Form übergeben, auf der sie abkühlt. Als weitere untere Form kann auch dieselbe Form oder eine gleich ausgebildete Form verwendet werden wie als erste untere Biegeform (Schwerkraftbiegeform).

Es ist möglich, für das Übernehmen der Glasscheibe aus der ersten unteren Form (Vorbiegeform) und für das Übergeben der Glasscheibe von der zweiten unteren Form (Pressbiegeform) auf die Halteform zum Abkühlen zwei verschiedene erfindungsgemäße Werkzeuge zu verwenden. Die beiden erfindungsgemäßen Werkzeuge können beispielsweise eine unterschiedlich gestaltete Kontaktfläche haben, welche der unterschiedlichen Scheibenform in den verschiedenen Prozessphasen Rechnung tragen. Die beiden Werkzeuge können aber auch identisch ausgestaltet sein, wobei die Verwendung zweier Werkzeuge verfahrenstechnische Vorteile haben kann, beispielsweise hinsichtlich der Taktzeit, wie in EP 1 836 136 B1 beschrieben.

In einer vorteilhaften Ausführung wird das Verfahren simultan auf mindestens zwei, bevorzugt zwei aufeinander liegende Glasscheiben angewandt. Die Glasscheiben werden dabei paarweise (das heißt als Scheibenpärchen) simultan gebogen. Die Biegung der beiden Glasscheiben ist dann besonders kongruent und aufeinander abgestimmt, so dass die Scheiben sich besonders eignen, miteinander zu einem Verbundglas hoher optischer Qualität laminiert zu werden.

Das erfindungsgemäße Biegewerkzeug wird als eine obere Form verwendet. Durch den die Kante der Glasscheibe bestreichenden Luftstrom im ersten Druckbereich, der durch den ersten, verminderten Druck erzeugt wird, kann die die Glasscheibe zuverlässig entgegen der Wirkung der Schwerkraft am Biegewerkzeug gehalten werden. Der erste Druckbereich eignet sich auch, um mehrere aufeinanderliegende Glasscheiben simultan zu halten.

Der erste Druck p₁ entspricht in einer bevorzugten Ausführung bezogen auf den Umgebungsdruck einem Unterdruck von 1 mbar bis 20 mbar, besonders bevorzugt von 2 mbar bis 10 mbar, ganz besonders bevorzugt von 3 mbar bis 6 mbar. Wird der Umgebungsdruck näherungsweise als 1 bar angenommen (Standardbedingungen), so beträgt der erste Druck p₁ damit bevorzugt von 980 mbar bis 999 mbar, besonders bevorzugt von 990 mbar bis 998 mbar, ganz besonders bevorzugt von 994 mbar bis 997 mbar. Damit wird eine ausreichende Saugwirkung entlang der Scheibenkanten erzielt, so dass das Biegewerkzeug als obere Biegeform verwendet werden kann. Glasscheiben, auch mehrere Glasscheiben simultan, können vorteilhaft am Biegewerkzeug angesaugt und gehalten werden.

Der zweite Druck p₂ entspricht in einer bevorzugten Ausführung bezogen auf den Umgebungsdruck einem Unterdruck von 0 mbar bis 5 mbar, besonders bevorzugt von 0 mbar bis 2 mbar, ganz besonders bevorzugt von 0 mbar bis 1 mbar. Es liegt also bezogen auf den Umgebungsdruck ein Unterdruck von höchstens 5 mbar, besonders bevorzugt höchstens 2 mbar, ganz besonders bevorzugt höchstens 1 mbar vor. Damit kann ein unerwünschtes Biegen infolge der Saugwirkung wirksam vermieden werden. Wird der Umgebungsdruck näherungsweise als 1 bar angenommen (Standardbedingungen), so beträgt der zweite Druck p₂ damit bevorzugt mindestens 995 mbar, besonders bevorzugt mindestens 998 mbar, ganz besonders bevorzugt mindestens 999 mbar. In einer vorteilhaften Ausgestaltung entspricht der zweite Druck p₂ dem Umgebungsdruck.

Die Glasscheibe oder die Glasscheiben enthalten bevorzugt Kalk-Natronglas, können aber alternativ auch andere Glassorten wie Borsilikatglas oder Quarzglas enthalten. Die Dicke der Glasscheiben beträgt typischerweise 0,5 mm bis 10 mm, bevorzugt 1 mm bis 5 mm.

Werden zwei oder mehrere Glasscheiben simultan gebogen, so ist zwischen den Scheiben bevorzugt ein Trennmittel angeordnet, so dass die Scheiben nicht dauerhaft aneinander haften.

Das erfindungsgemäße Werkzeug wird bevorzugt als Werkzeug in einem Biegeprozess für Glasscheiben im Fahrzeugbereich verwendet, insbesondere zum paarweisen Biegen von Glasscheiben, welche als Bestandteile eines Verbundglases vorgesehen sind. Eine solche Verbundscheibe ist bevorzugt eine Windschutzscheibe, kann aber auch eine Dachscheibe, Seitenscheibe oder Heckscheibe sein.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch ein gattungsgemäßes Biegewerkzeug nach dem Stand der Technik,
- Fig. 2: eine Draufsicht auf eine Ausgestaltung des erfindungsgemäßen Biegewerkzeugs,
- Fig. 3: einen Querschnitt entlang A-A' durch das Biegewerkzeug nach Figur 2,
- Fig. 4: eine schrittweise Darstellung einer Ausführungsform des erfindungsgemäßen Verfahrens und
- Fig. 5: ein Flussdiagramm einer Ausführungsform des erfindungsgemäßen Verfahrens.

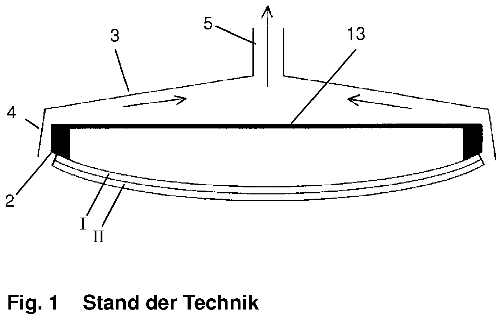

Figur 1 zeigt ein Werkzeug für Glasbiegeprozesse nach dem Stand der Technik. Das Werkzeug ist eine obere Form, welche geeignet ist, eine zwei aufeinander liegende Glasscheiben I, II durch eine Saugwirkung gegen den Einfluss der Schwerkraft an einer rahmenartigen, konvexen Kontaktfläche 2 zu halten. Die Kontaktfläche 2 ist auf einem sogenannten Skelett 13 angeordnet. Zur Erzeugung der Saugwirkung umfasst das Werkzeug ein Ansaugrohr 5, über das Luft abgesaugt wird. Das Werkzeug verfügt weiter über eine Abdeckung 3, deren Ende mit einem umlaufenden Luftleitblech 4 ausgestattet ist. Das Luftleitblech 4 umgibt die Kontaktfläche 2 umlaufend. Durch das Biegeskelett 13 und die Abdeckung 3 mit dem Luftleitblech 4 wird der durch das Ansaugrohr erzeugte Luftstrom so geleitet, dass er die Kanten der Glasscheiben bestreicht. Dadurch wird das Glasscheibenpaar I, II sicher an der Kontaktfläche 2 gehalten.

Die Scheiben I, II sind vorgebogen, beispielsweise durch Schwerkraftbiegen in einer unteren Biegeform. Das dargestellte Werkzeug kann beispielsweise verwendet werden, um das Glasscheibenpaar I, II aus der unteren Form aufzunehmen und an eine andere Form zu übergeben. Beispielsweise kann das Glasscheibenpaar I, II einem Pressbiege-Prozess unterzogen werden, wobei es zwischen dem dargestellten Werkzeug und einer Gegenform unter Einwirkung von Druck- und/oder Saugwirkung verformt wird.

Das dargestellte Werkzeug und Biegeverfahren, bei denen es eingesetzt werden kann, sind aus EP 1 836 136 B1, WO 2012/080071 A1 und WO 2012/080072 A1 bekannt.

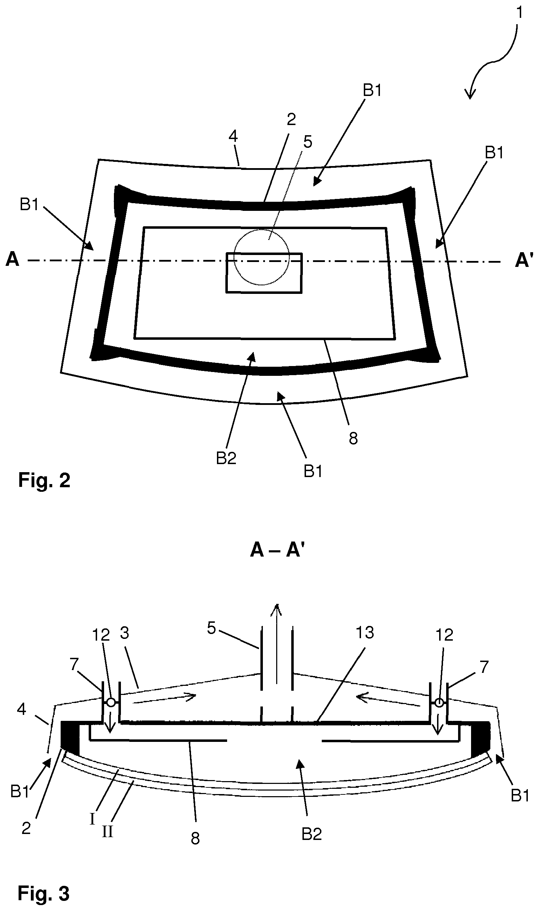

Figur 2 und Figur 3 zeigen je ein Detail eines erfindungsgemäßen, verbesserten Werkzeugs 1. Das Werkzeug 1 ist wie das Werkzeug in Figur 1 eine obere Form für einen Biegeprozess. Figur 2 zeigt eine Draufsicht auf die untere, zur Kontaktierung mit der zu biegenden Glasscheibe vorgesehene Seite des Werkzeugs 1, während Figur 3 einen Querschnitt zeigt.

Das Biegewerkzeug 1 weist wie das Werkzeug der Figur 1 ein Ansaugrohr 5 auf zur Erzeugung einer Saugwirkung auf, sowie eine Abdeckung 3 mit einem Luftleitblech 4 und ein Biegeskelett 13 mit einer rahmenartigen Kontaktfläche 2. Im Unterschied zum bekannten Werkzeug wird die Saugwirkung im Biegewerkzeug gezielt aufgeteilt, wodurch eine optimierte Druckverteilung erzeugt wird.

Das Biegewerkzeug weist zwei verschiedene Druckbereich B1 und B2 auf, in denen unterschiedliche Drücke erzeugt werden können, welche auf die Glasscheiben I, II wirken. Der erste Druckbereich B1 ist umlaufend angeordnet etwa zwischen Luftleitblech 4 und Kontaktfläche 2. Der zweite Druckbereich B2 ist in dem zentralen, von der Kontaktfläche 2 umgebenden Bereich des Werkzeugs 1 angeordnet.

Das Werkzeug 1 ist geeignet, im ersten Druckbereich B1 einen ersten, verminderten Druck p₁ zu erzeugen. Der Druck p₁ führt zu einem aufwärts gerichteten Luftstrom zwischen Luftleitblech 4 und Kontaktfläche 2. Sind eine oder mehrere Glasscheiben I, II erfindungsgemäß im Kontakt mit dem Biegewerkzeug 1, so werden die Seitenkanten der Glasscheiben durch den Luftstrom bestrichen. Der Luftstrom ist dazu geeignet, eine oder auch mehrere aufeinanderliegende Glasscheiben entgegen der Wirkung der Schwerkraft an der Kontaktfläche des Werkzeugs 1 zu halten. Der erste Druck p₁ im ersten Druckbereich B1 erfüllt also die Funktion des Luftstroms im Werkzeug nach dem Stand der Technik gemäß Figur 1. Um ein Glasscheibenpaar I, II mit einer typischen Scheibendicke von jeweils etwa 2,1 mm zu halten, eignet sich beispielweise ein erster Druck p₁, der bezogen auf den Umgebungsdruck einem Unterdruck von 3 mbar bis 6 mbar entspricht.

Das Werkzeug 1 ist weiter geeignet, im zweiten Druckbereich B2 einen zweiten Druck p₂ zu erzeugen, welcher größer ist als der erste Druck p₁. Die Saugwirkung ist im zweiten Druckbereich B2 also geringer als im ersten Druckbereich B1. Der zweite Druckbereich B2 verhindert unerwünschte Auswirkungen der Saugwirkung auf die Vorbiegung der Scheibe, insbesondere in deren zentralem Bereich. Wie aus der Figur zu erkennen ist, würde eine starke Saugwirkung im zentralen Bereich der Scheibe der Vorbiegung entgegenwirken und es bestünde die Gefahr, dass die Vorbiegung dadurch verringert wird oder sogar eine "Gegenbiegung" im zentralen Bereich erzeugt würde. Dies kann durch das erfindungsgemäße Werkzeug mit dem zweiten Druckbereich B2 wirksam vermieden werden. Ein typischer zweiter Druck p₂ entspricht beispielsweise etwa dem Umgebungsdruck oder liegt nur leicht darunter mit einem Unterdruck von beispielsweise 1 mbar.

Ein Unterdruck im Ansaugrohr 5, der geeignet ist, auf die Druckbereiche wie vorstehend beschrieben aufgeteilt zu werden, beträgt beispielsweise etwa 80 mbar.

Zur Erzeugung der Saugwirkungen weist das Werkzeug 1 ein Ansaugrohr 5 auf. Das Ansaugrohr 5 ist auch der von der Kontaktfläche 2 abgewandten Seite des Werkzeugs 1 angeordnet, also der Oberseite. Die Druckbereiche B1 und B2 sind mit dem Ansaugrohr verbunden, wodurch ein verminderter Druck erzeugt wird. Die Abdeckung 3 und das die Kontaktfläche 2 tragende Skelett 13 bilden eine Leitung zwischen dem ersten Druckbereich B1 und dem Ansaugrohr 5. Das Ansaugrohr 5 ist in der Draufsicht der Figur 2 eigentlich nicht zu erkennen, seine Position ist aber durch eine gestrichelte Linie angedeutet.

Der zweite Druckbereich B2 verfügt über eine (in den Figuren nicht dargestellte) Verbindung zum Ansaugrohr 5, wodurch auch im zweiten Druckbereich B2 ein verminderter Druck erzeugt wird. Zur Erhöhung des zweiten Drucks p₂ weist das Werkzeug 1 Belüftungsrohre 7 auf. Die Belüftungsrohre 7 verlaufen zwischen dem Skelett 13 und der Abdeckung 3 und verbinden den zweiten Druckbereich B2 mit der Umgebung auf der von den Kontaktflächen 2 abgewandten Seite des Werkzeugs 1. Der zweite Druck p₂ ergibt sich durch die Saugwirkung des Ansaugrohres 5 und die durch die Belüftungsrohre 7 nachströmende Luft. Zur aktiven Regulierung des zweiten Drucks p₂ sind die Belüftungsrohre 7 mit Ventilen 12 versehen. Die nachströmende Luft ist in den Figuren durch Pfeile gekennzeichnet.

Das Skelett 13 ist mit einem Umleitblech 8 versehen, welches über eine zentrale Öffnung verfügt. Das Umleitblech 8 lenkt die durch die Belüftungsrohre 7 nachströmende Luft um, so dass sie etwa mittig in den zweiten Druckbereich B2 strömt. Dadurch wird eine homogene Ausbreitung erreicht, was für die Oberfläche der Glasscheibe vorteilhaft ist. Ein mittig angebrachtes, zentrales Belüftungsrohr ist in der dargestellten Ausgestaltung nicht möglich, da der dafür notwendige Platz durch das zentrale Ansaugrohr 5 belegt ist.

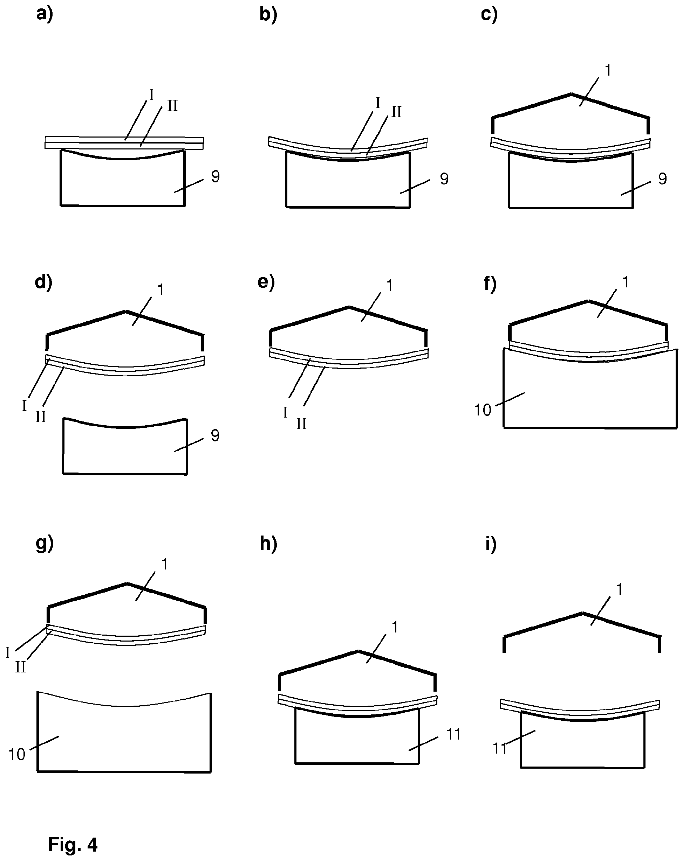

Figur 4 zeigt schematisch die Schritte einer Ausführungsform des erfindungsgemäßen Verfahrens. Zunächst werden zwei aufeinander liegende Glasscheiben I, II, welche im Ausgangszustand plan sind, auf einer untere Biegeform 9 positioniert (Teil a). Die Scheiben auf der Biegeform 9 werden auf Biegetemperatur, beispielsweise 600 °C, erwärmt und schmiegen sich infolge der Schwerkraft an die Form der unteren Biegeform 9 an (Teil b). Die Glasscheiben I, II werden also mittels Schwerkraftbiegen vorgebogen. Nach dem Schwerkraftbiegen werden die Glasscheiben I, II vom erfindungsgemäßen Werkzeug 1 übernommen. Dazu wird das Werkzeug 1 von oben an die Glasscheiben I, II auf der unteren Biegeform 9 angenähert und mit der Kontaktfläche 2 in Kontakt gebracht (Teil c). Anschließend wird über das Ansaugrohr 5 die Saugwirkung erzeugt. Aufgrund des ersten Drucks p₁ werden die Glasscheiben I, II am Biegewerkzeug 1 gehalten und können von diesem nach oben bewegt und damit der unteren Biegeform 9 entnommen werden (Teil d). Der zweite Druck p₂ verhindert Biegefehler in der Scheibenmitte. Nachdem die Glasscheiben vom Biegewerkzeug 1 übernommen wurden (Teil e), eine untere Saugbiegeform 10 von unten an die Glasscheiben I, II angenähert. Die Glasscheiben I, II werden zwischen dem erfindungsgemäßen Werkzeug 1 und der unteren Saugbiegeform 10 durch Pressbiegen in ihre endgültige Form gebogen (Teil f). Die untere Saugbiegeform 10 wird anschließend wieder abgesenkt (Teil g) und die Glasscheiben I, II werden mittels des Biegewerkzeug 1 auf eine untere Halteform 11 abgelegt und durch Ausschalten der Saugwirkung auf diese Halteform 11 übergeben (Teil h). Das Biegewerkzeug 1 wird dann nach oben bewegt (Teil i) und ist für den Biegeprozess des nächsten Scheibenpaares bereit. Die Glasscheiben I, II kühlen auf der unteren Halteform 11 auf Umgebungstemperatur ab. Als untere Halteform 11 kann auch dieselbe Form oder eine gleich ausgebildete Form verwendet werden wie als erste untere Biegeform 9 (Schwerkraftbiegeform).

Die hier schematisch dargestellten Verfahrensschritte geben das in EP 1 836 136 B1 detaillierter beschriebene Verfahren wieder, wobei die dort verwendete obere Form (forme superieure 11) durch das erfindungsgemäße Werkzeug 1 ersetzt wurde.

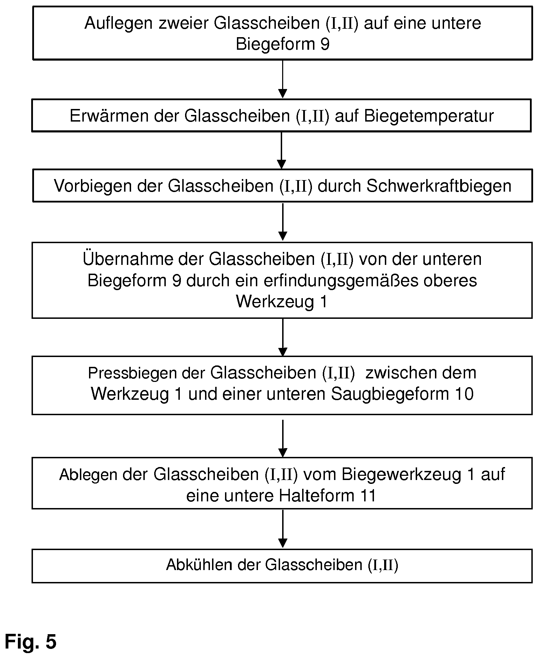

Figur 5 zeigt das Ausführungsbeispiel gemäß Figur 4 anhand eines Flussdiagramms.

### Bezugszeichenliste:

- (1): Erfindungsgemäßes Werkzeug zum Halten mindestens einer Glasscheibe

- (2): rahmenartige Kontaktfläche
- (3): Abdeckung
- (4): Luftleitblech
- (5): Ansaugrohr
- (7): Belüftungsrohr
- (8): Umleitblech
- (9): erste untere Biegeform / Schwerkraftbiegeform
- (10): zweite untere Biegeform / Saugbiegeform
- (11): untere Halteform
- (12): Ventil von 7
- (13): Skelett von 1

- (B1): erster Druckbereich
- (B2): zweiter Druckbereich

- (p₁): erster, verminderter Druck
- (p2): zweiter Druck

- (I): Glasscheibe
- (II): Glasscheibe

## Patentansprüche

1. Werkzeug (1) zum Halten mindestens einer Glasscheibe (I,II) durch eine Saugwirkung in einem Biegeprozess, umfassend eine rahmenartige, konvexe Kontaktfläche (2) und eine Abdeckung (3) mit einem peripheren, die Kontaktfläche (2) zumindest bereichsweise umgebenden Luftleitblech (4), wobei das Werkzeug (1) dazu geeignet ist,
- einen ersten, verminderten Druck (p₁) zu erzeugen in einem ersten Druckbereich (B1) zwischen dem Luftleitblech (4) und der Kontaktfläche (2);
- einen zweiten Druck (p₂) zu erzeugen in einem zweiten Druckbereich (B2), welcher in einem zentralen Bereich innerhalb der Kontaktfläche (2) angeordnet ist, wobei der zweite Druck (p₂) größer ist als der erste Druck (p₁).

2. Werkzeug (1) nach Anspruch 1, das dazu geeignet ist, die Glasscheibe (I,II) zu halten, ohne sie zu biegen.

3. Werkzeug (1) nach Anspruch 1 oder 2, wobei der erste Druckbereich (B1) geeignet ist, die Kante der zu biegenden Glasscheibe (I,II) zumindest abschnittsweise mit einem Luftstrom zu bestreichen und dadurch die Glasscheibe (I,II) an die Kontaktfläche (2) anzudrücken.

4. Werkzeug (1) nach einem der Ansprüche 1 bis 3, welches mit einem Ansaugrohr (5) versehen ist, mit dem der erste Druckbereich (B1) verbunden ist und durch das der erste Druck (p₁) erzeugt wird.

5. Werkzeug (1) nach einem der Ansprüche 1 bis 4, welches mit mindestens einem Belüftungsrohr (7) versehen ist, welches den zweiten Druckbereich (B2) mit der Umgebung verbindet.

6. Werkzeug (1) nach Anspruch 5, wobei das Belüftungsrohr (7) mit einem Ventil (12) zur Regulierung des Durchflusses versehen ist.

7. Verfahren zum Biegen mindestens einer Glasscheibe (I,II), das mindestens einen Halteschritt umfasst, bei dem ein Werkzeug (1) nach einem der Ansprüche 1 bis 6 als eine obere Form verwendet wird und wobei die Glasscheibe (I,II) durch den die Kante bestreichenden Luftstrom gegen den Einfluss der Schwerkraft am Werkzeug (1) gehalten wird.

8. Verfahren nach Anspruch 7, wobei das Halten der Glasscheibe (I,II) ohne Biegen der Glasscheibe (I,II) stattfindet.

9. Verfahren nach Anspruch 7 oder 8, wobei
- die Glasscheibe (I,II) auf Biegetemperatur erwärmt wird und auf einer ersten unteren Form (9) vorgebogen wird,
- die Glasscheibe (I,II) durch das Werkzeug (1) von der ersten unteren Form (9) aufgenommen und an eine weitere Form übergeben wird.

10. Verfahren nach Anspruch 9, wobei die Glasscheibe (I,II) nach dem Vorbiegen zwischen dem Werkzeug (1) und einer konkaven zweiten unteren Form (10) in einem Pressbiegeschritt gebogen wird.

11. Verfahren nach Anspruch 10, wobei die zweite untere Form (10) massiv und mit Öffnungen versehen ist und durch die Öffnungen der zweiten unteren Form (10) eine Saugwirkung auf die Glasscheibe (I,II) ausgeübt wird, welche geeignet ist, die Glasscheibe (I,II) weiter zu verformen.

12. Verfahren nach Anspruch 11, wobei die Glasscheibe (I,II) nach dem Pressbiegen auf eine untere Halteform (11) zum Abkühlen übergeben wird.

13. Verfahren nach einem der einem der Ansprüche 7 bis 12, wobei zwei aufeinander liegende Glasscheiben (I,II) paarweise simultan gebogen werden.

14. Verfahren nach einem der Ansprüche 7 bis 13, wobei der erste Druck (p₁) einem Unterdruck von 1 mbar bis 20 mbar und der zweite Druck (p₂) einem Unterdruck von 0 mbar bis 5 mbar entspricht und wobei bevorzugt der erste Druck (p₁) einem Unterdruck von 2 mbar bis 10 mbar und der zweite Druck (p₂) einem Unterdruck von 0 mbar bis 2 mbar entspricht.

15. Verwendung eines Werkzeugs (1) nach einem der Ansprüche 1 bis 6 als Werkzeug in einem Biegeprozess für Glasscheiben im Fahrzeugbereich, insbesondere zum paarweisen Biegen von Glasscheiben, welche als Bestandteile eines Verbundglases vorgesehen sind, insbesondere einer Windschutzscheibe.

## Claims

1. Tool (1) for holding at least one glass pane (I,II) by means of suction in a bending process, comprising a frame-like, convex contact surface (2) and a cover (3) having a peripheral air guide plate (4) that surrounds the contact surface (2) at least in regions, wherein the tool (1) is suitable for generating
- a first, reduced pressure (p₁) in a first pressure region (B1) between the air guide plate (4) and the contact surface (2);
- a second pressure (p₂) in a second pressure region (B2), which is arranged in a central region inside the contact surface (2), wherein the second pressure (p₂) is greater than the first pressure (p₁).

2. Tool (1) according to claim 1, which is suitable for holding the glass pane (I,II) without bending it.

3. Tool (1) according to claim 1 or 2, wherein the first pressure region (B1) is suitable for sweeping the edge of the glass pane (I,II) to be bent at least in sections with a stream of air and, by this means, to press the glass pane (I,II) against the contact surface (2).

4. Tool (1) according to one of claims 1 through 3, which is provided with a suction pipe (5), with which the first pressure region (B1) is connected and by means of which the first pressure (p₁) is generated.

5. Tool (1) according to one of claims 1 through 4, which is provided with at least one vent pipe (7), which connects the second pressure region (B2) to the surroundings.

6. Tool (1) according to claim 5, wherein the vent pipe (7) is provided with a valve (12) for regulating flow.

7. Method for bending at least one glass pane (I,II), that includes at least one holding step, during which a tool (1) according to one of claims 1 through 6 is used as an upper mold and wherein the glass pane (I,II) is held, against the influence of gravity, against the tool (1) by the stream of air sweeping the edge.

8. Method according to claim 7, wherein the holding of the glass pane (I,II) takes place without bending the glass pane (I,II).

9. Method according to claim 7 or 8, wherein
- the glass pane (I,II) is heated to bending temperature and is pre-bent on a first lower mold (9),
- the glass pane (I,II) is picked up from the first lower mold (9) by the tool (1) and transferred to another mold.

10. Method according to claim 9, wherein, after the pre-bending, the glass pane (I,II), is bent between the tool (1) and a concave second lower mold (10) in a press bending step.

11. Method according to claim 10, wherein the second lower mold (10) is solid and is provided with openings and, through the openings of the second lower mold (10), suction that is suitable for further deforming the glass pane (I,II) is exerted on the glass pane (I,II).

12. Method according to claim 11, wherein the glass pane (I,II) is transferred after press bending onto a lower holding mold (11) for cooling.

13. Method according to one of claims 7 through 12, wherein two glass panes (I,II) lying one atop the other are simultaneously bent as a pair.

14. Method according to one of claims 7 through 13, wherein the first pressure (p₁) is a vacuum of 1 mbar to 20 mbar and the second pressure (p₂) is a vacuum of 0 mbar to 5 mbar and wherein preferably the first pressure (p₁) is a vacuum of 2 mbar to 10 mbar and the second pressure (p₂) is a vacuum of 0 mbar to 2 mbar.

15. Use of a tool (1) according to one of claims 1 through 6 as a tool in a bending process for glass panes in the motor vehicle sector, in particular for paired bending of glass panes that are provided as components of a laminated glass, in particular of a windshield.

## Revendications

1. Outil (1) pour le maintien d'au moins une feuille de verre (I, II) par un effet d'aspiration dans un procédé de bombage, comportant une surface de contact (2), convexe, en forme de cadre, et un recouvrement (3) ayant une tôle de guidage d'air (4), périphérique, entourant au moins par zones la surface de contact (2), l'outil (1) étant apte à
- produire une première pression (p₁), réduite, dans une première zone de pression (B1) entre la tôle de guidage d'air (4) et la surface de contact (2) ;
- produire une seconde pression (p₂) dans une seconde zone de pression (B2), laquelle est disposée dans une zone centrale à l'intérieur de la surface de contact (2), la seconde pression (p₂) étant supérieure à la première pression (p₁).

2. Outil (1) selon la revendication 1, qui est apte à maintenir la feuille de verre (I, II) sans bomber celle-ci.

3. Outil (1) selon l'une des revendications 1 ou 2, dans lequel la première zone de pression (B1) est apte à aspirer la bordure de la feuille de verre à bomber (I, II) au moins par zones par un flux d'air et ainsi à presser la feuille de verre (I, II) sur la surface de contact (2).

4. Outil (1) selon l'une des revendications 1 à 3, qui est doté d'un tuyau d'aspiration (5) avec lequel la première zone de pression (B1) est reliée et par lequel la première pression (p₁) est produite.

5. Outil (1) selon l'une des revendications 1 à 4, qui est doté d'au moins un tuyau de ventilation (7), lequel relie la seconde zone de pression (B2) à l'environnement.

6. Outil (1) selon la revendication 5, dans lequel le tuyau de ventilation (7) est doté d'une soupape (12) pour la régulation du débit.

7. Procédé pour le bombage d'au moins une feuille de verre (I, II), qui comporte au moins une étape de maintien, dans lequel un outil (1) selon l'une des revendications 1 à 6 est utilisé en tant que forme supérieure et dans lequel la feuille de verre (I, II) est maintenue sur l'outil (1) par le flux d'air aspirant la bordure à l'encontre de l'effet de gravité.

8. Procédé selon la revendication 7, dans lequel le maintien de la feuille de verre (I, II) a lieu sans bombage de la feuille de verre (I, II).

9. Procédé selon l'une des revendications 7 ou 8, dans lequel
- la feuille de verre (I, II) est chauffée à la température de bombage et est prébombée sur une première forme inférieure (9) ;
- la feuille de verre (I, II) est reçue à partir de la première forme inférieure (9) par l'outil (1) et est tranférée sur une autre forme.

10. Procédé selon la revendication 9, dans lequel la feuille de verre (I, II), après le prébombage, est bombée dans une étape de bombage par pressage entre l'outil (1) et une seconde forme inférieure concave (10).

11. Procédé selon la revendication 10, dans lequel la seconde forme inférieure (10) est massive et dotée d'ouvertures et par les ouvertures de la seconde forme inférieure (10) un effet d'aspiration est exercé sur la feuille de verre (I, II), lequel est apte à déformer encore la feuille de verre (I, II).

12. Procédé selon la revendication 11, dans lequel la feuille de verre (I, II), après le bombage par pressage, est tranférée pour le refroidissement sur une forme de maintien inférieure (11).

13. Procédé selon l'une des revendications 7 à 12, dans lequel deux feuilles de verres superposées (I, II) sont bombées simultanément par paire.

14. Procédé selon l'une des revendications 7 à 13, dans lequel la première pression (p₁) correspond à une dépression de 1 mbar à 20 mbar, et la seconde pression (p₂), à une dépression de 0 mbar à 5 mbar, et dans lequel, de préférence, la première pression (p₁) correspond à une dépression de 2 mbar à 10 mbar, et la seconde pression (p₂), à une dépression de 0 mbar à 2 mbar.

15. Utilisation d'un outil (1) selon l'une des revendications 1 à 6 comme outil dans un procédé de bombage pour des feuilles de verre dans le domaine des véhicules, en particulier pour le bombage par paires de feuilles de verre, lesquelles sont prévues en tant qu'éléments d'une vitre feuilletée, en particulier d'un pare-brise.
